# EUROPEAN PATENT SPECIFICATION

(11) **EP 2 924 267 B1**
(45) Date of publication and mention of the grant of the patent: **25.01.2017**
(21) Application number: 15156771.6
(22) Date of filing: 26.02.2015
(51) Int. Cl.: F02D 41/02

(54) **System for preventing the accumulation of unburned hydrocarbons in a line of exhaust gas after treatment system of an internal combustion engine**
System zur Verhinderung der Ansammlung von unverbrannten Kohlenwasserstoffen in einem Abgasnachbehandlungssystem einer Brennkraftmaschine
Système pour empêcher l'accumulation d'hydrocarbures non brûlés dans une ligne de système de post-traitement de gaz d'échappement d'un moteur à combustion interne

(30) Priority: 26.02.2014 IT MI20140291
(43) Date of publication of application: 30.09.2015
(73) Proprietor: FPT Industrial S.p.A., 10156 Torino (IT)
(72) Inventor: Aimar, Bruno, 12020 Cartignano (IT); Cerciello, Giovanni, 10139 Torino (IT)
(74) Representative: Franzolin, Luigi

(56) References cited:
- EP-A1- 1 394 374
- EP-A2- 1 178 197

## Description

### Scope of the invention

The present invention relates to the field of purification systems of exhaust gases of an internal combustion engine and more precisely to a system for preventing the accumulation of unburned hydrocarbons in a line of exhaust gas after-treatment system.

### Background art

The after treatment systems of exhaust gases, generally referred to with the acronym ATS, are generally provided with at least one catalyst which provides for the conversion of the unburned hydrocarbons (CnHm), nitrogen oxides (NO) and carbon monoxide (CO) into carbon dioxide (CO2), water (H2O) and nitrogen (N2).

It is known that a catalyst is fully activated, i.e. becomes operational, upon achieving at least 250 °C. But already at 200 °C, it can convert at least the unburned hydrocarbons.

Systems/strategies are known to accelerate the heating step of the exhaust line of an internal combustion engine.

Generally, they are based on the choking of the exhaust line, for example through a flap or by reducing the outflow section of a variable-geometry turbine arranged on the exhaust line. Other systems/strategies to accelerate the heating step of the exhaust line consist in post-injection of fuel. Further systems/strategies comprise the activation of suitable electric heater.

Said systems/strategies to accelerate the heating step of the exhaust line ATS are well known to the skilled person in the art, thus, it is not needed to offer further details.

Therefore, said systems/strategies offer a further contribution in heating up the ATS, with respect to the normal contribution of the internal combustion engine, helping the latter for this aim.

The control processes of these systems, according to different control techniques, activate after a predefined period of time since the ignition of the internal combustion engine, for example after verifying a too slow dynamic heating of the ATS, or they can be deactivated by other processes when the latter determine that such systems are not able to lead to the complete activation of the catalyst.

During the heating step, the unburned hydrocarbons, for simplicity referred to as HC, tend to accumulate in the catalyst.

When the catalyst reaches the activation temperature, an excessive accumulation of HC could damage the catalyst due to the achievement of temperatures above those admissible for the device itself.

The prior art, in order to avoid damage to the catalyst, provides for the implementation of the so-called pre-catalysts, i.e. additional catalysts, having a very small volume compared to the main catalyst, which are accommodated very close to the exhaust manifold of the internal combustion engine, so as to achieve as soon as possible such an activation temperature as to burn the unburned hydrocarbons produced by the internal combustion engine before they reach the main catalyst or any device for the reduction of pollutant emissions defining the ATS.

The implementation of pre-catalysts requires an additional cost for manufacturers of vehicles and machinery, in addition, they must be designed so as not to interfere with other devices, such as the main catalyst and any particulate filters.

### Summary of the invention

The object of the present invention is to overcome all the above drawbacks and provide a system for preventing the accumulation of unburned hydrocarbons in a line of exhaust gas after treatment system devoid of pre-catalysts.

The idea at the basis of the present invention is to prevent the implementation of any pre-catalyst, estimating the accumulation of unburned hydrocarbons in at least one point/component of the line of exhaust gas after treatment system, and to activate systems/strategies of heating of the exhaust line also on the basis of the accumulation of the estimated unburned hydrocarbons.

This implies that the processes for accelerating the heating of the exhaust line are controlled differently compared to the prior art.

In particular, the process of estimating the accumulation of unburned hydrocarbons in the line of exhaust gas after treatment system (ATS) takes priority over any further activation or deactivation process, on the control of the process for accelerating the heating of the exhaust gas after treatment line. Therefore, it may happen that the process for accelerating the ATS heating is activated earlier compared to prior art, or that it remains active even when other processes might control the deactivation thereof.

The object of the present invention is a system for preventing the accumulation of unburned hydrocarbons in a device for the reduction of pollutant emissions defining a line of exhaust gas after treatment system of an internal combustion engine.

A device for the reduction of pollutant emissions may refer to at least one of the following per se known devices: DOC, NSC, DPF, SCR.

### Brief description of the figures

Further features and advantages of the present invention will be clear from the following detailed description of an exemplary embodiment of the same (and variants thereof) and from the accompanying drawings given by way of a non-limiting example, in which:
figure 1 shows a logical control diagram according to the present invention;
figure 2 shows an exemplary implementation of the present invention through a flowchart;
figure 3 schematically shows an internal combustion engine operatively connected to an exhaust gas after treatment system to which the present invention is applied.

The same reference numerals and letters in the figures identify the same elements or components.

In the context of the present description, the terms "first", "second", etc. do not indicate any reciprocal relationship nor they are intended to be limiting.

### Detailed description of exemplary embodiments

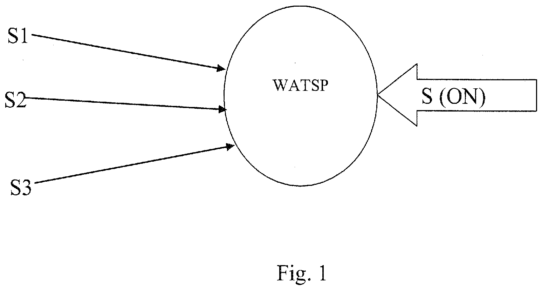

Figure 1 shows a logical control diagram of the activation of a process for accelerating (WATSP) the heating of the after treatment system (ATS).

The abbreviation WATSP is the acronym of the expression "WarmUP ATS Process", i.e. a process/system for accelerating the heating of the ATS, which as described above can be achieved in different ways, including choking of the exhaust line and/or the fuel post-injection and/or the activation of a suitable heater arranged inside or around a portion of the ATS piping.

Other processes S1, S2, S3 may intervene to control the WATSP according to specific/predefined control strategies, causing the activation or deactivation.

According to the present invention, a process S estimates the amount of HC accumulated in at least one point in the exhaust line ATS and when such an estimate exceeds a first predefined threshold, the activation SON of the WATSP is controlled irrespective of any other ongoing process.

Such a process S takes priority over all the others S1, S2, S3 ... and therefore this is graphically shown by an arrow much thicker than the others.

Thereafter, when the estimated HC are less than a second predefined threshold, the WATSP returns under the control of the other processes S1, S2, S3. Therefore, the WATSP remains active if one of them deems that the WATSP must be active, or if no process forces the deactivation thereof.

Therefore, the HC estimation process does not have the power to deactivate the WATSP (process for accelerating the ATS heating), but just to activate it.

Therefore, irrespective of the hierarchy of the known processes that can determine the activation or deactivation of the WATSP, the present estimation process S is virtually parallel to such a hierarchy.

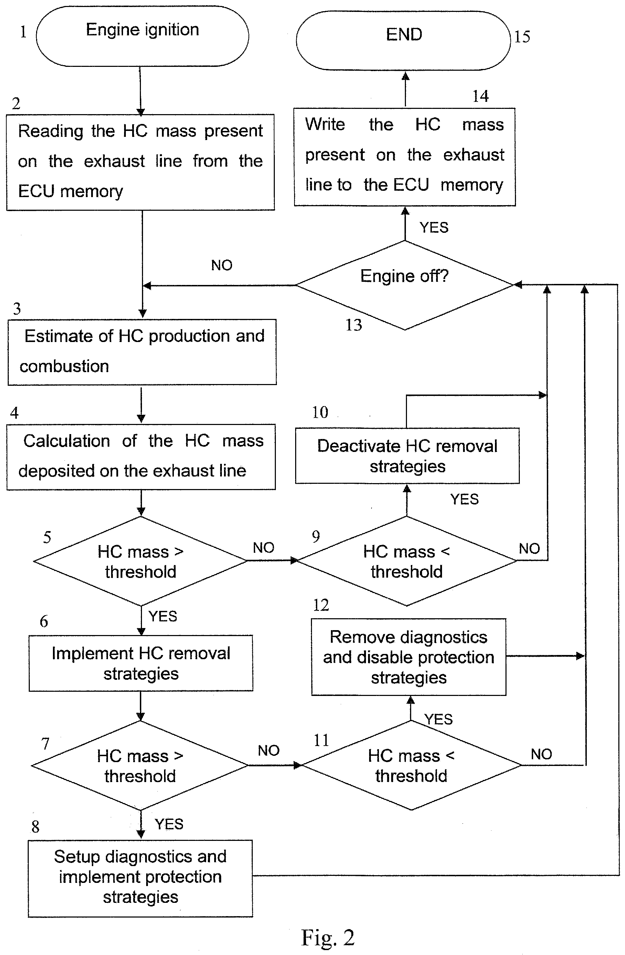

Figure 2 shows an example of a control flowchart according to the present invention.
Step 1: ignition of internal combustion engine E;
Step 2: acquisition of a residual value R of HC stored in the ATS,
Step 3: estimate of the mass of HC produced P and of the mass of HC converted C,
Step 4: calculation of the mass I of HC stored in the exhaust line (at least one point of the exhaust line): I = R+P-C;
Step 5: verification of whether I is greater than a first threshold T1,
Step 6: if so, WATSP activation, otherwise
Step 9: verification of whether I is smaller than a second threshold T1[?]
Step 10: if so, WATSP deactivation and go to step 13;
otherwise, go to step 13;
after activating the WATSP (step 6)
Step 7: verification of whether I is greater than a third threshold T3,
Step 8: if so, activation of a protection procedure on the internal combustion engine
otherwise
Step 11: verification of whether I is smaller than a fourth T4 lower than T3 and higher than T2[?]
Step 12: if so, deactivation of the protection procedure on the internal combustion engine and then go to step 13;
Step 13: verification of whether the internal combustion engine is switched off,
Step 14: if so, assigning I to R (I = R) and the end of the control at step 15, otherwise continue from step 3, i.e. from the estimate of the mass of HC produced P and of the mass of HC converted C.

From the example of flowchart in figure 2 it is clear that, when it is not possible to dispose of the HC mass produced by the internal combustion engine, a condition is reached where the HC mass stored in the exhaust line exceeds a second threshold T2; in that case, measures are taken to thereafter prevent reaching the activation temperature of the catalyst CAT, as this could lead to damage to the catalyst itself and/or to the entire vehicle.

For example, such measures may consist in limiting the torque delivered by the engine and the consequent production of heat, which would make the ATS heat up and probably catch fire.

Should the HC mass I exceed such a second threshold T2, according to the present invention, an error would be permanently stored in the engine control unit, ECU, which controls the lighting of an indicator light indicating a fault that requires the vehicle to be brought to a workshop.

As regards the estimate of the HC produced by the internal combustion engine, it is possible to rely on heuristic maps, i.e. obtained at the bench on the basis of RPM, mass of fuel injected, intake air mass and preferably also ambient temperature. All these parameters are generally available to the control unit ECU of internal combustion engines using appropriate sensors, therefore the implementation of such maps into a control unit ECU is within the skills of the man skilled in the art.

As regards the estimate of the HC converted by the exhaust line, it varies from component to component:
catalyst DOC, NSC (NOx Storage Catalyst), DPF, SCR, and depending essentially on the conformation of the single component that defines the ATS and on the temperature thereof.

Also the temperature of various points of the ATS is available to the ECU through appropriate sensors, therefore also the implementation of the estimate of the HC converted is within the skills of the man skilled in the art.

Mathematical models or bench tests may be adopted to estimate the conversion process of each component defining the ATS as a function of its temperature.

In view of the fact that the various components that define the ATS may have different behaviors in terms of accumulation or conversion of HC, the present method can be implemented in two different ways, i.e. by estimating the HC stored in the most problematic component, i.e. the component that tends to more easily store HC, which typically is the catalyst (DOC or SCR) and/or the particulate filter, or by estimating the individual accumulations of HC in the single components/devices that define the ATS.

Therefore, the present system may be implemented by estimating a storage of HC at least in a device for the reduction of pollutant emissions that defines the ATS.

The method may be advantageously implemented by modifying/adapting the processing unit ECU of the internal combustion engine.

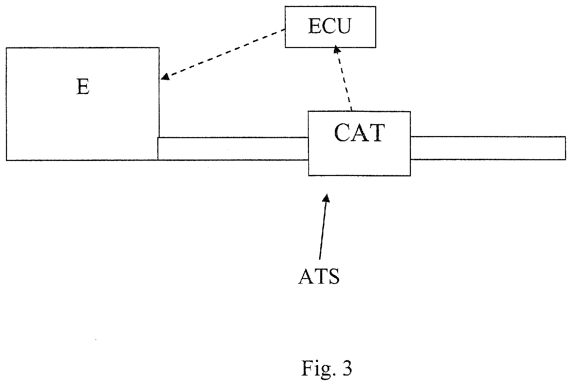

Figure 3 schematically shows an internal combustion engine E controlled by a processing unit ECU, which among the various engine parameters described above also receives a signal related to at least the catalyst temperature.

According to a preferred implementation of the present invention, the internal combustion engine is a diesel cycle and the above catalyst is a DOC, per se known.

The present invention may be advantageously implemented by a computer program which comprises coding means for implementing one or more steps of the method, when this program is run on a computer.

Therefore, it is understood that the scope of protection extends to said computer program and moreover to computer-readable means which comprise a recorded message, said computer-readable means comprising program coding means for implementing one or more steps of the method when said program is run on a computer.

Embodiment variants of the non limiting example described are possible without departing from the scope of protection of the present invention.

From the above description, the man skilled in the art is able to implement the object of the invention without introducing any further construction details. The elements and the features shown in the different preferred embodiments may be combined without departing from the scope of protection of the present application.

## Claims

1. A method for preventing the accumulation of unburned hydrocarbons in a line of exhaust gas after treatment system (ATS) of an internal combustion engine comprising at least one device for the reduction of pollutant emissions, the method comprising the preliminary step of arranging said exhaust gas after treatment line devoid of any pre-catalyst and a procedure for the continuous estimation (s) of a mass (I) of unburned hydrocarbons stored in at least said device for the reduction of pollutant emission, said estimation procedure (S) activating (S ON) a system/strategy for accelerating the heating of the exhaust line (ATS), beyond a normal contribution of the internal combustion engine, when said mass (I) of unburned hydrocarbons exceeds a predefined threshold (T1).

2. Method according the claim 1, wherein when further control processes (S1, S2, S3,..) of said system/strategy for accelerating the heating of the exhaust line (ATS) are present, said estimation procedure (s) takes priority over said further processes (S1, S2, S3, .. ).

3. Method according to one of the preceding claims, wherein said estimation procedure comprises
- calculation of a first mass (P) of unburned hydrocarbons (HC) produced by said internal combustion engine,
- calculation of a second mass (C) of unburned hydrocarbons
(HC) converted at least by said device for the reduction of pollutant emission.

4. Method according to claim 3, wherein, in a first execution of said estimation procedure (S), a value of said mass (I) of stored unburned hydrocarbons is given by the difference between said first mass (P) and said second mass (P) of unburned hydrocarbons (HC).

5. Method according to claim 4, wherein said value of said mass (I) of stored unburned hydrocarbons is stored in a non-volatile memory and wherein, for each further execution of said estimation procedure (S), a value of said mass (I) of stored unburned hydrocarbons is given by the addition of said stored value with said first mass (P) to which said second mass (P) of unburned hydrocarbons (HC) is subtracted (I=R+P-C).

6. Method according to any one of the preceding claims, wherein when said mass (I) of stored unburned hydrocarbons exceeds a second threshold (T3) then said estimation procedure (s) activates a limitation mode of the heat produced by the internal combustion engine.

7. Computer program comprising program code means adapted to execute said estimation procedure (s) of the claims from 1 to 6, when such program is run on a computer.

8. Computer-readable means comprising a recorded program, said computer-readable means comprising program code means adapted to execute said estimation procedure (s) according to the claims from 1 to 6, when said program is run on a computer.

9. Exhaust gas after treatment system (ATS) of an internal combustion engine, the system being devoid of any pre-catalyst and comprising
- at least one device for the reduction of pollutant emission,
- means for the continuous estimation of a mass (I) of unburned hydrocarbons stored in at least said device for the reduction of pollutant emission and for the activation (S ON) of a system/strategy for accelerating an exhaust gas (ATS) heating, when said mass (I) of unburned hydrocarbons exceeds a predefined threshold (T1).

10. Vehicle or machine comprising an internal combustion engine and an exhaust gas after treatment system (ATS) of the internal combustion engine according to claim 9.

## Patentansprüche

1. Verfahren zur Verhinderung der Ansammlung unverbrannter Kohlenwasserstoffe in Reihe mit einem Abgasnachbehandlungssystem (ATS) eines Verbrennungsmotors, umfassend mindestens eine Vorrichtung zur Reduzierung von Schadstoffemissionen, das Verfahren umfassend den vorläufigen Schritt des Anordnens der Abgasnachbehandlungssystemreihe ohne jeden Vorkatalysator, und eine Prozedur zur kontinuierlichen Schätzung (s) einer Masse (I) von in wenigstens einer Vorrichtung zur Reduzierung der Schadstoffemission gespeicherten unverbrannten Kohlenwasserstoffen, wobei die Schätzprozedur (S) ein System / eine Strategie aktiviert (S EIN), um die Erwärmung der Abgasleitung (ATS) über einen normalen Beitrag des Verbrennungsmotors hinaus zu beschleunigen, wenn die Masse (I) an unverbrannten Kohlenwasserstoffen eine vordefinierte Schwelle (T1) überschreitet.

2. Verfahren nach Anspruch 1, wobei, wenn weitere Steuerungsprozesse (S1, S2, S3, ...) des Systems / der Strategie zur Beschleunigung der Erwärmung der Abgasleitung (ATS) vorhanden sind, die Schätzprozedur (s) Priorität über die weiteren Prozesse erhält (S1, S2, S3, ...).

3. Verfahren nach einem der vorhergehenden Ansprüche, wobei die Schätzprozedur umfasst:
- die Berechnung einer ersten Masse (P) an unverbrannten Kohlenwasserstoffen (HC), die durch den Verbrennungsmotor produziert wurden,
- die Berechnung einer zweiten Masse (C) an unverbrannten Kohlenwasserstoffen (HC), die wenigstens von der Vorrichtung zur Reduzierung der Schadstoffemission umgewandelt wurden.

4. Verfahren nach Anspruch 3, wobei in einer ersten Ausführung der Schätzprozedur (S) ein Wert der Masse (I) an gespeicherten unverbrannten Kohlenwasserstoffen durch die Differenz zwischen der ersten Masse (P) und der zweiten Masse (P) an unverbrannten Kohlenwasserstoffen (HC) erhalten wird.

5. Verfahren nach Anspruch 4, wobei der Wert der Masse (I) an gespeicherten unverbrannten Kohlenwasserstoffen in einem nichtflüchtigen Speicher gespeichert wird und wobei für jede weitere Ausführung der Schätzprozedur (S) ein Wert der Masse (I) an gespeicherten unverbrannten Kohlenwasserstoffen erhalten wird durch die Addition des gespeicherten Wertes mit der ersten Masse (P), von welchem die zweite Masse (P) an unverbrannten Kohlenwasserstoffen (HC) subtrahiert wird (I = R + P - C).

6. Verfahren nach einem der vorhergehenden Ansprüche, wobei, wenn die Masse (I) an gespeicherten unverbrannten Kohlenwasserstoffen einen zweiten Schwellenwert (T3) übersteigt, dann die Schätzprozedur (s) einen Begrenzungsmodus an durch den Verbrennungsmotor erzeugter Wärme aktiviert.

7. Computerprogramm, umfassend zur Ausführung der Schätzprozedur (s) der Ansprüche 1 bis 6 geeignete Programmcodemittel, wenn dieses Programm auf einem Computer ausgeführt wird.

8. Computerlesbares Mittel, umfassend ein aufgezeichnetes Programm, wobei das computerlesbare Mittel zur Ausführung der Schätzprozedur (s) der Ansprüche 1 bis 6 geeignete Programmcodemittel umfasst, wenn dieses Programm auf einem Computer ausgeführt wird.

9. Abgasnachbehandlungssystem (ATS) eines Verbrennungsmotors, wobei das System frei an Vorkatalysatoren ist, umfassend
- Mindestens eine Vorrichtung zur Reduzierung der Schadstoffemission,
- Mittel für die kontinuierliche Bestimmung einer Masse (I) von in zumindest einer Vorrichtung zur Reduzierung der Schadstoffemission gespeicherter unverbrannter Kohlenwasserstoffe und zur Aktivierung (S EIN) eines Systems / einer Strategie zur Beschleunigung einer Abgasbeschleunigungsheizung (ATS), wenn die Masse (I) unverbrannter Kohlenwasserstoffe einen vorgegebenen Schwellenwert (T1) überschreitet.

10. Fahrzeug oder Maschine, umfassend einen Verbrennungsmotor und ein Abgasnachbehandlungssystem (ATS) des Verbrennungsmotors nach Anspruch 9.

## Revendications

1. Procédé pour empêcher l'accumulation d'hydrocarbures non brûlés dans une ligne de système de post-traitement de gaz d'échappement (ATS) d'un moteur à combustion interne comprenant au moins un dispositif pour la réduction des émissions polluantes, le procédé comprenant l'étape préliminaire consistant à agencer ladite ligne de post-traitement de gaz d'échappement dépourvue de tout précatalyseur ainsi qu'une procédure pour l'estimation en continu (s) d'une masse (I) d'hydrocarbures non brûlés stockés dans au moins ledit dispositif pour la réduction des émissions polluantes, ladite procédure d'estimation (S) activant (S ON) un système/une stratégie pour accélérer le chauffage de la ligne d'échappement (ATS), au-delà d'un apport normal du moteur à combustion interne, lorsque ladite masse (I) d'hydrocarbures non brûlés dépasse un seuil prédéfini (T1).

2. Procédé selon la revendication 1, dans lequel, lorsque d'autres processus de contrôle (S1, S2, S3, ...) dudit système/de ladite stratégie pour accélérer le chauffage de la ligne d'échappement (ATS) sont présents, ladite procédure d'estimation (s) est prioritaire sur lesdits autres processus (S1, S2, S3, ...) .

3. Procédé selon l'une quelconque des revendications précédentes, dans lequel ladite procédure d'estimation comprend :
- le calcul d'une première masse (P) d'hydrocarbures (HC) non brûlés produits par ledit moteur à combustion interne,
- le calcul d'une seconde masse (C) d'hydrocarbures (HC) non brûlés transformés au moins par ledit dispositif pour la réduction des émissions polluantes.

4. Procédé selon la revendication 3, dans lequel, lors d'une première exécution de ladite procédure d'estimation (S), la valeur de ladite masse (I) d'hydrocarbures non brûlés stockés est donnée par la différence entre ladite première masse (P) et ladite seconde masse (P) d'hydrocarbures (HC) non brûlés.

5. Procédé selon la revendication 4, dans lequel ladite valeur de ladite masse (I) d'hydrocarbures non brûlés stockés est stockée dans une mémoire non volatile et dans lequel, pour chaque autre exécution de ladite procédure d'estimation (S), la valeur de ladite masse (I) d'hydrocarbures non brûlés stockés est donnée en additionnant ladite valeur stockée et ladite première masse (P), somme de laquelle est soustraite ladite seconde masse (P) d'hydrocarbures (HC) non brûlés (I=R+P-C).

6. Procédé selon l'une quelconque des revendications précédentes, dans lequel, lorsque ladite masse (I) d'hydrocarbures non brûlés stockés dépasse un second seuil (T3), ladite procédure d'estimation (s) active alors un mode de limitation de la chaleur produite par le moteur à combustion interne.

7. Programme informatique comprenant des moyens de code de programme adaptés pour exécuter ladite procédure d'estimation (s) selon les revendications 1 à 6, lorsque ce programme est exécuté sur un ordinateur.

8. Moyens lisibles sur ordinateur comprenant un programme enregistré, lesdits moyens lisibles sur ordinateur comprenant des moyens de code de programme adaptés pour exécuter ladite procédure d'estimation (s) selon les revendications 1 à 6, lorsque ledit programme est exécuté sur un ordinateur.

9. Système de post-traitement de gaz d'échappement (ATS) d'un moteur à combustion interne, le système étant dépourvu de tout précatalyseur et comprenant :
- au moins un dispositif pour la réduction des émissions polluantes,
- des moyens pour l'estimation e d'une masse (I) d'hydrocarbures non brûlés stockés dans au moins ledit dispositif pour la réduction des émissions polluantes et pour l'activation (S ON) d'un système/d'une stratégie pour accélérer le chauffage de la ligne d'échappement (ATS), lorsque ladite masse (I) d'hydrocarbures non brûlés dépasse un seuil prédéfini (T1).

10. Véhicule ou machine comprenant un moteur à combustion interne et un système de post-traitement de gaz d'échappement (ATS) du moteur à combustion interne selon la revendication 9.
